# EUROPEAN PATENT APPLICATION

(11) **EP 2 239 893 A1**
(43) Date of publication of application: **13.10.2010**
(21) Application number: 09705517.2
(22) Date of filing: 30.01.2009
(51) Int. Cl.: H04L 12/56, H04M 3/00

(54) **NODE DEVICE, COMMUNICATION SYSTEM, AND SERVICE PROVIDING METHOD**

(30) Priority: 30.01.2008 JP 2008018449
(71) Applicant: NEC Corporation, Minato-ku Tokyo 108-8001 (JP)
(72) Inventor: ISHII, Tamaki, Tokyo 108-8001 (JP)
(74) Representative: Glawe, Delfs, Moll
(86) International application number: PCT/JP2009/051544
(87) International publication number: WO 2009/096509

(57) **Abstract**

The node apparatus of the present invention is a node apparatus (1, 2b) of an IP multimedia subsystem that provides a multimedia service to a user by using SIP to control multimedia communication that includes speech and is of a configuration that includes: a health check unit (11, 21b) that implements a health check upon an adjacent node apparatus; and a recognition unit (12, 22b) that recognizes a fault state of an adjacent node apparatus based on a result of a health check by the health check unit.

## Description

### Technical Field

The present invention relates to a node apparatus, a communication system, and a method of providing a service in an IMS (IP (Internet Protocol) Multimedia Subsystem) network that uses SIP (Session Initiation Protocol) in the control of multimedia communication that includes speech.

### Background Art

A system is described that uses SIP in the control of multimedia communication that includes speech to provide users with a multimedia service. In the following explanation, IMS is described as an example of the multimedia system.

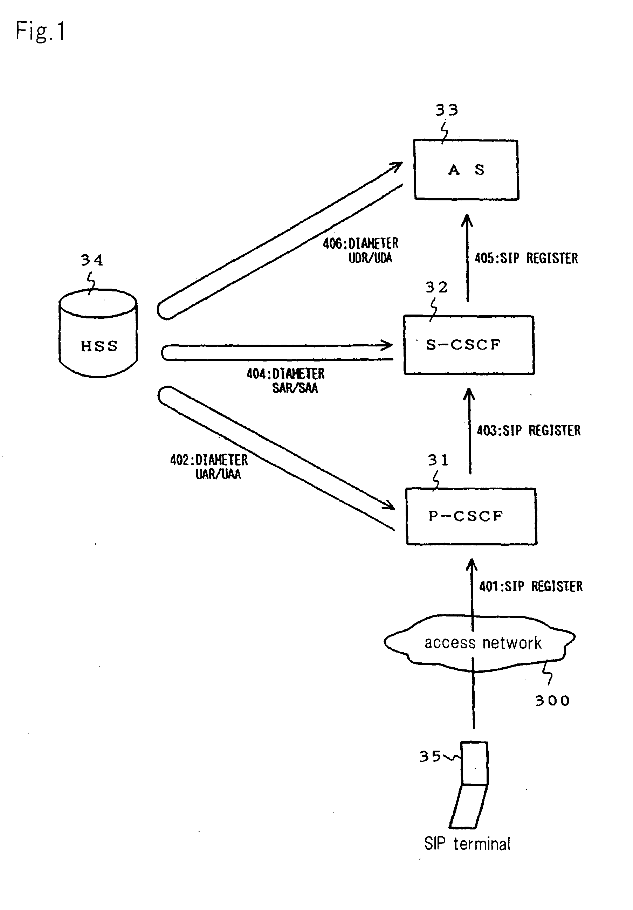

FIG. 1 shows registration control in an IMS network that relates to the present invention. P-CSCF (Proxy-Call Session Control Function) 31 shown in FIG. 1 is an SIP server that SIP terminal 35 initially contacts. AS (Application Server) 33 is a server that processes an additional service. S-CSCF (Serving-Call Session Control Function) 32 is an SIP server that chiefly carries out control of sessions and the execution of service, and communicates with AS 33 at the time of executing an additional service. HSS (Home Subscriber Server) 34 is a server that manages subscriber information.

Referring to FIG. 1, registration control in an IMS network is described. SIP terminal 35 transmits a registration request to P-CSCF 31 by means of an SIP REGISTER signal (Step 401).

Upon receiving the registration request from SIP terminal 35 by means of the SIP REGISTER signal, P-CSCF 31 carries out a DIAMETER UAR (User Authorization Request)/UAA (User Authorization Answer) procedure to acquire from HSS 34 information of the S-CSCF that is the REGISTER transmission destination (Step 402).

P-CSCF 31 selects S-CSCF 32 from the information of S-CSCF that was acquired from HSS 34 and transmits an SIP REGISTER signal to S-CSCF 32 that was selected (Step 403).

S-CSCF 32, having received the SIP REGISTER signal, carries out a DIAMETER SAR (Server Assignment Request)/SAA (Server Assignment Answer) procedure to acquire the user's subscriber data and information of the AS that is the REGISTER transmission destination (Step 404).

S-CSCF 32 stores the subscriber data acquired from HSS 34, selects AS 33 from the information that was acquired from HSS 34, and transmits the SIP REGISTER signal to AS 33 that was selected (Step 405).

AS 33, having received the SIP REGISTER signal, carries out a DIAMETER UDR (User Data Request)/UDA (User Data Answer) procedure to acquire the service subscriber data of the user (Step 406).

In the registration control in an IMS network that is related to the present invention, the S-CSCF and AS that provide an IMS service to a user are determined by the registration procedure of Steps 401-406 described hereinabove.

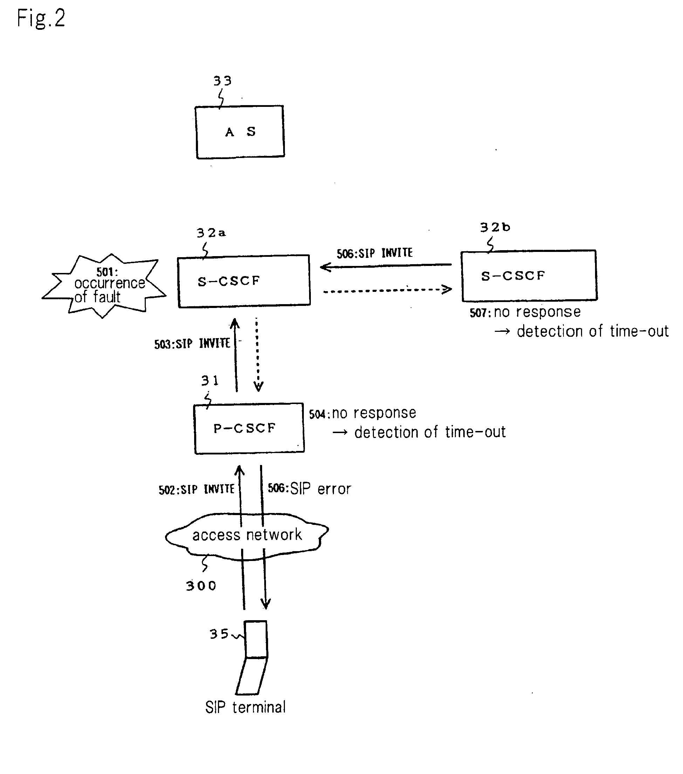

FIG. 2 shows the call origination/termination control at the time of an S-CSCF fault in an IMS network related to the present invention. It is here assumed that S-CSCF 32a has experienced a fault state due to some cause (Step 501).

When SIP terminal 35 transmits a call origination request by means of an SIP INVITE signal to P-CSCF 31 by way of access network 300 during the fault state of this S-CSCF 32a (Step 502), P-CSCF 31 transmits the SIP INVITE signal to S-CSCF 32a that was determined at the time of registration (Step 503).

Because S-CSCF 32a is in a fault state, S-CSCF 32a is unable to receive the SIP INVITE signal and does not return a response to P-CSCF 31, whereby P-CSCF 31 detects a response wait time-out for the SIP INVITE signal (Step 504). P-CSCF 31 that has detected the time-out transmits an error indicating that the call origination request has not been received to SIP terminal 35 by way of access network 300 (Step 505).

In addition, S-CSCF 32b transmits an SIP INVITE signal to S-CSCF 32a to carry out a termination request (Step 506). S-CSCF 32a is in a fault state and is therefore unable to receive the SIP INVITE signal and does not return a response to S-CSCF 32b, whereby S-CSCF 32b detects a response wait time-out for the SIP INVITE signal (Step 507).

JP-A-2006-191594 (hereinbelow referred to as Patent Document 1) discloses a method and apparatus for providing a multimedia ring-back service to a user device in an IMS network.

In the technology disclosed in this Patent Document 1, a connection establishment request from the caller-party device acts to establish a connection between the caller-party device and called-party device in the IMS network, and in response to the connection establishment request, acquires multimedia content information that acts to establish at least one multimedia session with the caller-party device, and transmits at least one portion of the multimedia content information to the caller-party device at the same time as the establishment of the connection.

### Summary of Invention

In an IMS network that is related to the present invention, the AS and S-CSCF that carry out the call origination/termination service of a user are selected at the time of registration. As a result, when a node fault occurs for some reason in the IMS node that was selected at the time of registration, the problem arises in which service that includes call origination/termination cannot be provided until the fault node recovers unless reassignment to another IMS node is carried out by means of de-registration from the user.

In other words, in the IMS network related to the present invention, in the event of a node fault for whatever reason in the S-CSCF and AS that acquired subscriber data at the time of registration, the problem arises in which the user is unable to receive call origination/termination service until the de-registration procedure is implemented and a call control service node (S-CSCF and AS) that has the subscriber data is newly allotted.

Further, in the IMS network that is related to the present invention, call origination/termination services cannot be provided if S-CSCF 32A that was assigned to a user at the time of registration should experience a fault state as described hereinabove. Still further, regarding call origination/termination control at the time of an AS fault in an IMS network that is related to the present invention, the same problem as described above occurs in the provision of services that include call origination/termination.

The technology disclosed in the above-described Patent Document 1 describes only the provision of a multimedia ring-back service in a user device and discloses nothing regarding the above-described fault at the time of registration or at the time of an AS fault and therefore cannot provide a solution to the above-described problems.

An exemplary object of the invention is to provide a node apparatus, a communication system, and a method of providing service whereby an adjacent node fault can be recognized and a user can continue to receive IMS services of call origination/termination.

A node apparatus according to an exemplary aspect of the invention is a node apparatus of an IP multimedia subsystem that provides a multimedia service to a user by using SIP to control multimedia communication that includes speech, the node apparatus having a configuration that includes: a health check unit that implements a health check upon an adjacent node apparatus; and a recognition unit that recognizes a fault state of an adjacent node apparatus based on a result of a health check by the health check unit.

The communication system according to an exemplary aspect of the invention is of a configuration that includes a plurality of node apparatuses according to the above-described aspect of the invention.

The method of providing a service according to an exemplary aspect of the invention is a method of providing a service by a node apparatus of an IP multimedia subsystem that provides a multimedia service to a user by using SIP to control multimedia communication that includes speech, the method carrying out a health check process of implementing a health check upon an adjacent node apparatus and a recognition process of recognizing a fault state of an adjacent node apparatus based on a result of a health check realized by the health check process.

### Brief Description of Drawings

FIG. 1 shows registration control in an IMS network that is related to the present invention;
FIG. 2 shows call origination/termination control at the time of an S-CSCF fault in an IMS network that is related to the present invention;
FIG. 3 is a block diagram showing an example of the configuration of an IMS network according to the present invention;
FIG. 4 shows an SIP OPTIONS health check procedure on an adjacent node in the IMS network according to the first exemplary embodiment of the present invention;
FIG. 5 shows a call origination detour control procedure by means of an adjacent node at the time of an S-CSCF fault in the first exemplary embodiment of the present invention;
FIG. 6 shows a call termination detour control procedure by means of an adjacent node at the time of an S-CSCF fault in the first exemplary embodiment of the present invention;
FIG. 7 is a block diagram showing an example of the configuration of an IMS network in the second exemplary embodiment of the present invention;
FIG. 8 shows an IMS registration procedure in the second exemplary embodiment of the present invention;
FIG. 9 shows a call origination detour control procedure at the time of an S-CSCF fault in the second exemplary embodiment of the present invention;
FIG. 10 shows a call termination detour control procedure at the time of an S-CSCF fault in the second exemplary embodiment of the present invention;
FIG. 11 shows a call origination detour procedure at the time of an AS fault in the third exemplary embodiment of the present invention; and
FIG. 12 shows a call termination detour procedure at the time of an AS fault in the third exemplary embodiment of the present invention.

### Explanation of Reference

- 1: P-CSCF
- 2, 2a, 2b, 2c: S-CSCF
- 3, 3a, 3b: AS
- 4: HSS
- 5: SIP terminal
- 11, 21a, 21b: health check unit
- 12, 22a, 22b: opposite-node fault recognition system
- 13, 23a, 23b: re-registration procedure implementation unit
- 100: access network

### Best Mode for Carrying Out the Invention

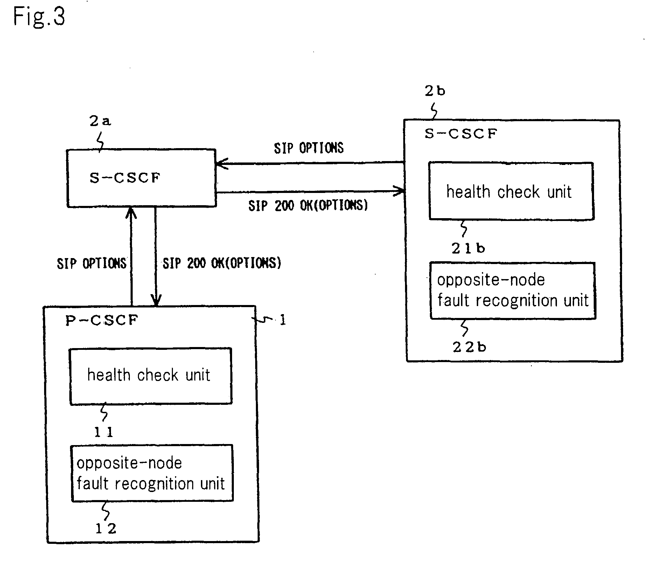

Exemplary embodiments of the present invention are next described with reference to the accompanying drawings. FIG. 3 is a block diagram showing an example of the configuration of an IMS network according to the present invention.

In FIG. 3, the IMS network according to the present invention is of a configuration that includes P-CSCF 1, S-CSCF 2a, and S-CSCF 2b.

P-CSCF 1 is provided with: health check unit 11 that carries out a health check by means of an SIP OPTIONS method with an IMS node (between P-CSCF 1 and S-CSCF 2a); and opposite-node fault recognition unit 12 that detects a fault of an opposite IMS node (S-CSCF 2a) based on the check result of health check unit 11.

Similarly, S-CSCF 2b is provided with: health check unit 21b that carries out a health check by means of an SIP OPTIONS method with an IMS node (between S-CSCF 2b and S-CSCF 2a); and opposite-node fault recognition unit 22b that detects a fault of the opposite IMS node (S-CSCF 2a) based on the check result of health check unit 21 b. Although not shown in the figure, S-CSCF 2a is of the same configuration as the above-described S-CSCF 2b.

P-CSCF 1 periodically transmits to opposite S-CSCF 2a SIP OPTIONS for inquiring regarding the capability and state of a communication partner. Upon receiving a health check request by means of the SIP OPTIONS, S-CSCF 2a transmits to P-CSCF 1 SIP 200 OK (OPTIONS) that indicates a normal health check.

In this way, P-CSCF 1 is able to recognize that the node state of opposite S-CSCF 2a is normal. When P-CSCF 1 does not receive 200 OK (OPTIONS) that is the health check response, P-CSCF 1 is able to recognize that opposite S-CSCF 2a is in a fault state.

Similarly, S-CSCF 2b periodically transmits SIP OPTIONS to opposite S-CSCF 2a. Upon receiving the health check request by means of SIP OPTIONS, S-CSCF 2a transmits to S-CSCF 2b SIP 200 OK indicating a normal health check.

In this way, S-CSCF 2b is able to recognize that the node state of opposite S-CSCF 2a is normal. When S-CSCF 2b does not receive 200 OK (OPTIONS) that is the health check response, S-CSCF 2b is able to recognize that opposite S-CSCF 2a is in a fault state.

In this way, by prescribing a health check method according to the SIP OPTIONS method between IMS nodes in the present invention, a fault state of an adjacent node can be recognized, whereby a state in which the call origination/termination service cannot be provided at the time of a call origination service request from a user and at the time of a call termination request to a user in an adjacent node can be recognized.

### First Exemplary Embodiment

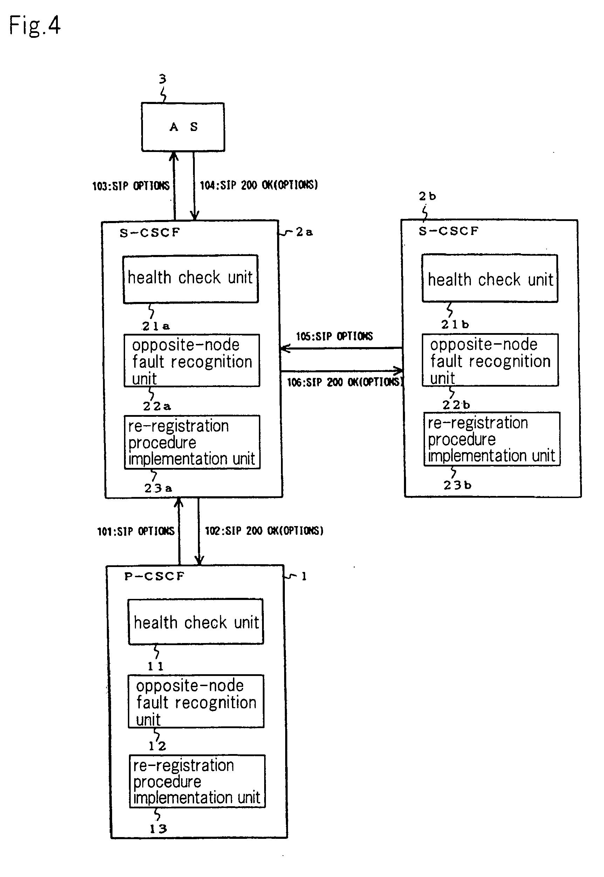

Explanation next regards the first exemplary embodiment of the present invention with reference to FIGs. 4-6.

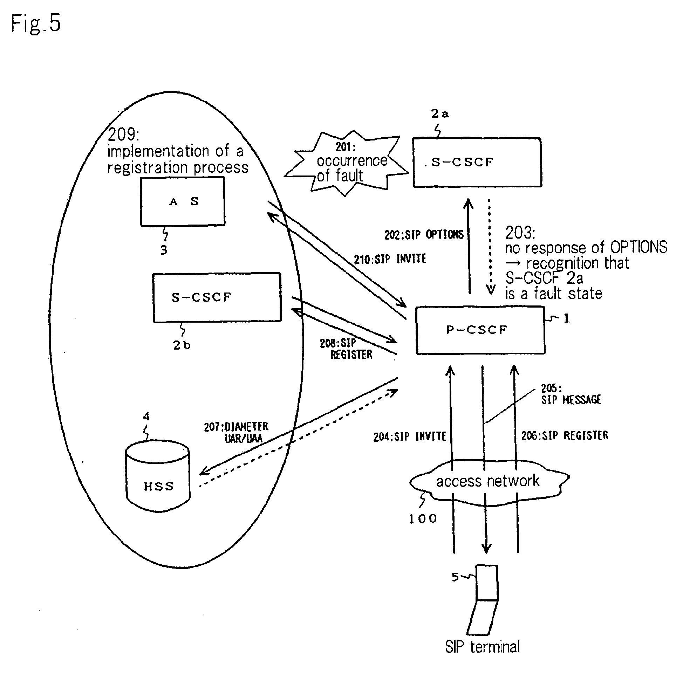

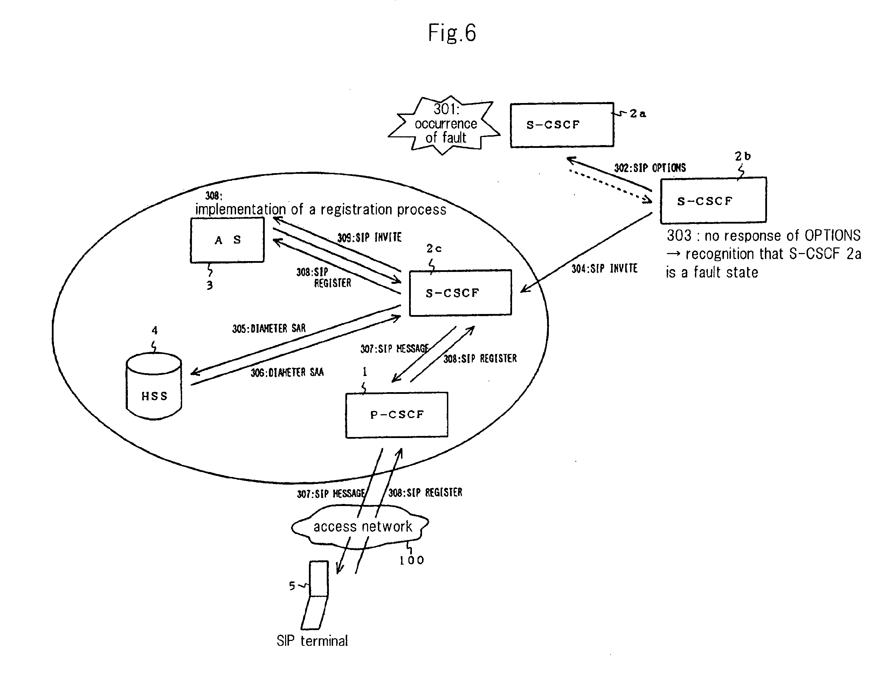

FIG. 4 shows an SIP OPTIONS health check procedure upon an adjacent node in an IMS network according to the first exemplary embodiment of the present invention. FIG. 5 shows a call origination detour control procedure by means of an adjacent node at the time of an S-CSCF fault according to the first exemplary embodiment of the present invention. FIG. 6 shows a call termination detour control procedure by means of an adjacent node at the time of an S-CSCF fault according to the first exemplary embodiment of the present invention.

The first exemplary embodiment of the present invention enables the recognition of a fault state of an adjacent node by implementing a health check mode by means of an SIP OPTIONS in an IMS network. In this way, the present exemplary embodiment can, even when a node fault has occurred in the S-CSCF and AS that carry out call control, provide a user with IMS services that include call origination/termination by controlling detour by means of re-registration by an adjacent node that has detected a node fault.

FIG. 4 shows a health check procedure by means of SIP OPTIONS in an IMS network. In FIG. 4, the IMS network according to the first exemplary embodiment is made up from P-CSCF 1, S-CSCF 2a, S-CSCF 2b, and AS 3.

P-CSCF 1 is provided with the above-described health check unit 11 and opposite-node fault recognition unit 12, and re-registration procedure implementation unit 13 that implements a re-registration procedure by an SIP MESSAGE method at the time a node fault is detected in opposite-node fault recognition unit 12.

S-CSCF 2a and S-CSCF 2b are provided with: the above-described health check units 21a and 21 b and opposite-node fault recognition units 22a and 22b, and re-registration procedure implementation units 23a and 23b that implement a re-registration procedure by means of an SIP MESSAGE method at the time that a node fault is detected by opposite-node fault recognition units 22a and 22b.

The health check procedure by means of SIP OPTIONS in an IMS network is next described. P-CSCF 1 periodically transmits SIP OPTIONS for making an inquiry about the capability and state of a communication partner to opposite S-CSCF 2a by means of health check unit 11 (Step 101).

Upon receiving the health check request by means of the SIP OPTIONS, S-CSCF 2a transmits to P-CSCF 1 SIP 200 (OPTIONS) indicating a normal health check (Step 102). SIP 200 OK (OPTIONS) is transmitted to P-CSCF 1 from health check unit 21a.

In this way, opposite-node fault recognition unit 12 of P-CSCF 1 is able to recognize that the node state of opposite S-CSCF 2a is normal. In addition, when opposite-node fault recognition unit 12 of P-CSCF 1 does not receive 200 OK (OPTIONS), opposite-node fault recognition unit 12 is able to recognize that opposite S-CSCF 2a is in a fault state.

Similarly, S-CSCF 2a periodically transmits SIP OPTIONS to opposite AS 3 by means of health check unit 21a (Step 103). AS 3, having received the health check request by means of SIP OPTIONS, transmits to S-CSCF 2a an SIP 200 OK (OPTIONS) indicating a normal health check (Step 104).

In this way, opposite-node fault recognition unit 22a of S-CSCF 2a is able to recognize the normal node state of opposite AS 3. When opposite-node fault recognition unit 22a of S-CSCF 2a does not receive 200 OK (OPTIONS) that is the health check response, opposite-node fault recognition unit 22a is able to recognize that opposite AS 3 is in a fault state.

S-CSCF 2b periodically transmits an SIP OPTIONS to opposite S-CSCF 2a by means of health check unit 21b (Step 105). S-CSCF 2a, having received the health check request by means of the SIP OPTIONS, transmits to S-CSCF 2b an SIP 200 OK (OPTIONS) indicating a normal health check (Step 106). In this case as well, the SIP 200 OK (OPTIONS) is transmitted to S-CSCF 2b from health check unit 21 a.

In this way, opposite-node fault recognition unit 22b of S-CSCF 2b is able to recognize that the node state of opposite S-CSCF 2a is normal. If opposite-node fault recognition unit 22b of S-CSCF 2b does not receive 200 OK (OPTIONS) that is the health check response, opposite-node fault recognition unit 22b is able to recognize that opposite S-CSCF 2a is in a fault state.

FIG. 5 shows the call origination detour control procedure when an S-CSCF has for some reason entered a fault state. In FIG. 5, P-CSCF 1, S-CSCF 2a, and S-CSCF 2b are of the same configuration as the configuration shown in the above-described FIG. 4. It is further assumed that S-CSCF 2a has for some reason experienced a fault state (Step 201).

P-CSCF 1, upon activating the above-described health check that is periodically executed, transmits an SIP OPTIONS signal to S-CSCF 2a (Step 202). S-CSCF 2a is in a fault state and therefore is unable to receive the SIP OPTIONS signal and cannot return a health check response. As a result, P-CSCF 1 that has transmitted the SIP OPTIONS signal of the health check detects a response wait time-out and recognizes that opposite S-CSCF 2a is in a fault state (Step 203).

SIP terminal 5 carries out a call origination request and therefore sends an SIP INVITE signal by way of access network 100 to P-CSCF 1 that was determined at the time of registration (Step 204).

P-CSCF 1 that has received the SIP INVITE signal attempts to transmit an SIP INVITE signal to S-CSCF 2a that was selected at the time of registration to carry out a call origination process, but because S-CSCF 2a is in a fault state, transmits an SIP MESSAGE signal (re-REG request) that indicates a registration request to SIP terminal 5 (Step 205). The SIP MESSAGE signal (re-REG request) is transmitted to SIP terminal 5 from re-registration procedure implementation unit 13 of P-CSCF 1 shown in FIG. 4.

SIP terminal 5 that has received the SIP MESSAGE signal determines that the signal is a re-registration request and transmits an SIP REGISTER signal to P-CSCF 1 that is the transmission origin of the SIP MESSAGE signal (Step 206).

P-CSCF 1 that has received the SIP REGISTER signal implements a DIAMETER UAR/UAA procedure upon HSS 4 to implement the re-registration procedure of that user (Step 207).

P-CSCF 1 selects S-CSCF 2b that differs from S-CSCF 2a that is in the fault state from the information of the S-CSCF that was acquired in the UAR/UAA procedure from HSS 4 and transmits an SIP REGISTER signal to S-CSCF 2b (Step 208). S-CSCF 2b that has received the SIP REGISTER signal links with HSS 4 and AS 3 and implements a normal registration process (Step 209).

Upon completion of registration, P-CSCF 1 transmits an SIP INVITE signal to S-CSCF 2b that carried out the new registration and then continues the call origination process (Step 210).

In the procedure described above, the user in the present exemplary embodiment is able to continue the call origination service by implementing a re-registration process even when S-CSCF 2a is in a fault state.

FIG. 6 shows a call termination control procedure when an S-CSCF has for some reason entered a fault state. In this case, S-CSCF 2a is assumed to have entered a fault state for some reason (Step 301).

When activating the above-described health check that is implemented periodically, S-CSCF 2b transmits an SIP OPTIONS signal to S-CSCF 2a (Step 302). Because S-CSCF 2a is in the fault state, S-CSCF 2a is unable to receive the SIP OPTIONS signal and is unable to return a health check response. As a result, S-CSCF 2b that has transmitted the health check SIP OPTIONS signal detects a response wait time-out and recognizes that opposite S-CSCF 2a is in a fault state (Step 303).

S-CSCF 2b specifies S-CSCF 2a in which the called party is accommodated by means of a DIAMETER LIR (Location Info Request)/LIA (Location Info Answer) procedure with HSS 4 and attempts to transmit an SIP INVITE signal to S-CSCF 2a to carry out a termination request to S-CSCF 2a.

Nevertheless, because the node of S-CSCF 2a is in a fault state, S-CSCF 2b selects another S-CSCF 2c opposing S-CSCF 2b and transmits the SIP INVITE signal to S-CSCF 2c (Step 304).

Because a profile of the user that received the termination request does not exist, S-CSCF 2c that has received the SIP INVITE signal transmits a DIAMETER SAR signal to HSS 4 to cause HSS 4 to carry out an UNREGISTERED SERVICE procedure (Step 305).

HSS 4 that has received the UNREGISTERED SERVICE request by means of the DIAMETER SAR recognizes that, because the user is in a registered state, a detour termination at the time of a fault has been generated, sets the information of the P-CSCF in which the user is registered and the Contact address information of SIP terminal 5 to a DIAMETER SAA signal, and transmits it to S-CSCF 2c (Step 306).

In HSS 4, the Contact address information of SIP terminal 5 and the information of the P-CSCF that are required for realizing the fault detour procedure must be received in the DIAMETER SAA signal from S-CSCF 2a at the time of registration from the user and stored.

S-CSCF 2c that has received the DIAMETER SAA signal recognizes the need for re-registration from the information of the P-CSCF and the Contact address information of SIP terminal 5 that were set in the signal information and transmits a SIP MESSAGE (re-REG request) signal requesting re-registration to the P-CSCF 1 that was acquired (Step 307).

P-CSCF 1 that has received the SIP MESSAGE signal transmits the SIP MESSAGE signal to SIP terminal 5. SIP terminal 5 that has received the SIP MESSAGE signal determines that the signal is a re-registration request and transmits an SIP REGISTER signal to the P-CSCF 1 that is the transmission origin of the SIP MESSAGE signal.

P-CSCF 1, having received this SIP REGISTER signal, implements a normal registration procedure and completes the re-registration process to S-CSCF 2c (Step 308). After completion of the re-registration process, S-CSCF 2c transmits an SIP INVITE signal to AS 3 that was selected at the time of registration to continue the call termination request (Step 309).

By means of the above-described procedures, a user in the present exemplary embodiment is able to continue the call termination service by implementing a re-registration process even when S-CSCF 2a has entered a fault state.

Thus, in the present exemplary embodiment, even when an S-CSCF that corresponds to the IMS node that has subscriber data enters a fault state, an adjacent node detects the fault of the S-CSCF by means of a health check realized by SIP OPTIONS and the adjacent node that has recognized the fault state implements a re-registration procedure (transmission of an SIP MESSAGE signal), whereby a call origination/termination service from the user can be provided similar to before the S-CSCF fault. As a result, the above-described problems can be solved in the present exemplary embodiment.

In other words, in the present exemplary embodiment, prescribing the health check mode realized by the SIP OPTIONS method between IMS nodes enables the recognition of a fault state of an adjacent node, and thus enables the recognition of a state in which a call origination/termination service cannot be provided in an adjacent node at the time of a call origination service request from a user and at the time of a call termination request to a user.

In the present exemplary embodiment, moreover, the prescription of a re-registration request by means of an SIP MESSAGE method and the implementation of a re-registration process by means of a SIP MESSAGE method by a node that has recognized the fault of an opposite node upon call origination/termination enables detour of the fault-state IMS node and implementation of the registration procedure. Further, the present exemplary embodiment enables continuation of the provision of IMS services that include call origination/termination even when a fault occurs in an S-CSCF.

### Second Exemplary Embodiment

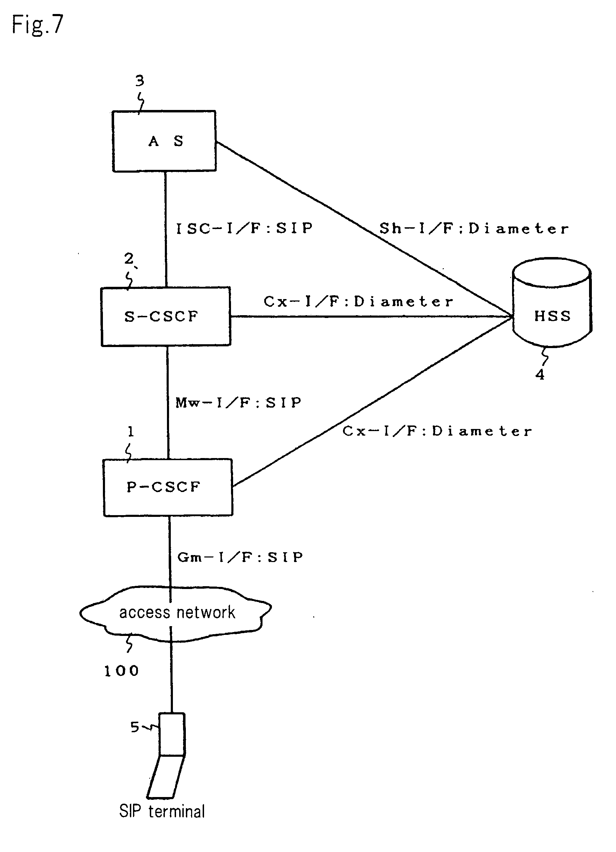

FIG. 7 is a block diagram showing an example of the configuration of an IMS network according to the second exemplary embodiment of the present invention. In FIG. 7, the IMS network according to the second exemplary embodiment of the present invention is made up from P-CSCF 1, S-CSCF 2, AS 3, HSS 4, and SIP terminal 5. In addition, the configurations of P-CSCF 1 and S-CSCF 2 are the same as in the first exemplary embodiment of the present invention shown in FIG. 4 described hereinabove.

SIP terminal 5 receives IMS services that include a call origination/termination service by means of VoIP (Voice over IP) from an IMS network by the implementation of a registration procedure by way of a Gm-I/F (Interface) according to SIP protocol.

P-CSCF 1, upon receiving an SIP REGISTER signal from SIP terminal 5, acquires information of S-CSCF 2 that provides IMS services from HSS 4 that is the subscriber data database by way of Cx-I/F according to DIAMETER protocol, and transmits the SIP REGISTER signal to S-CSCF 2. In addition, upon completion of the registration procedure, the Contact IP address of SIP terminal 5 and registration information such as the IP address of S-CSCF 2 are held, and relay control of the SIP signal is implemented in subsequent IMS services.

S-CSCF 2, upon receiving the SIP REGISTER signal from P-CSCF 1, acquires subscriber data from HSS 4 by way of Cx-I/F by means of DIAMETER protocol and, by holding these data, carries out subsequent call origination/termination services in accordance with the subscriber data.

S-CSCF 2 further transmits an SIP REGISTER signal to AS 3 in accordance with iFC (initial Filter Criteria) information contained in the subscriber data from HSS 4. Upon completing the registration procedure, S-CSCF 2 holds registration information such as the IP address of P-CSCF 1 and is thus able to implement routing of P-CSCF 1 at the time of the call termination service.

AS 3, upon receiving the SIP REGISTER signal from S-CSCF 2, acquires subscriber data from HSS 4 by way of Sh-I/F through DIAMETER protocol, and by holding this information, carries out subsequent call origination/termination services in accordance with the subscriber data.

HSS 4 is a subscriber database that manages service data of all subscribers and transmits subscriber data in accordance with requests from S-CSCF 2 and AS 3. In addition, HSS 4 reports S-CSCF 2 that carries out registration control to P-CSCF 1 in the registration procedure and holds the address of S-CSCF 2 that was reported.

As described hereinabove, the present exemplary embodiment is applied to an IMS network in which subscriber data that are necessary for carrying out call origination/termination services in S-CSCF 2 or AS 3 are downloaded from HSS 4 that is a subscriber database in accordance with a SIP REGISTER signal from SIP terminal 5 and services are provided in accordance with the subscriber data upon receiving from SIP terminal 5 requests for services that include call origination/termination.

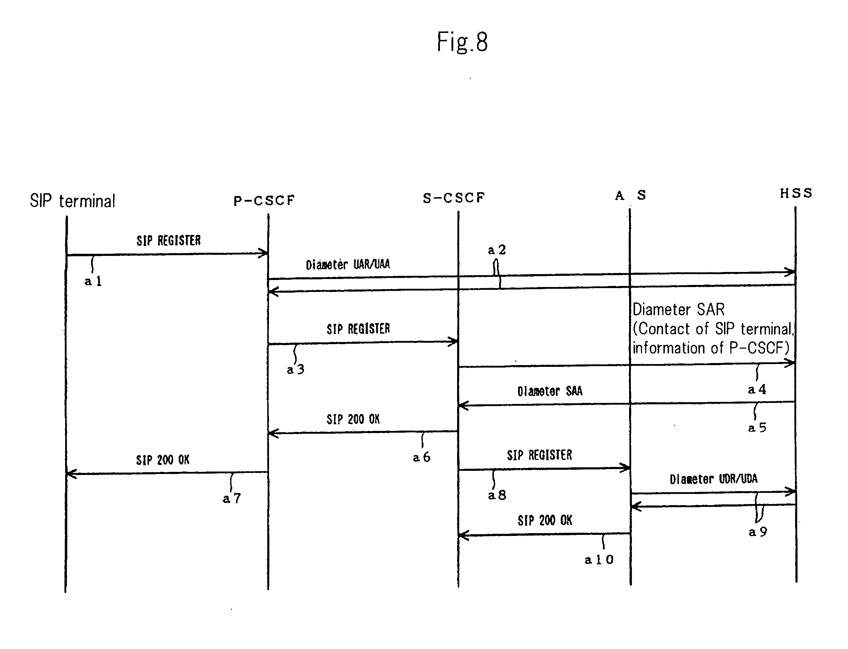

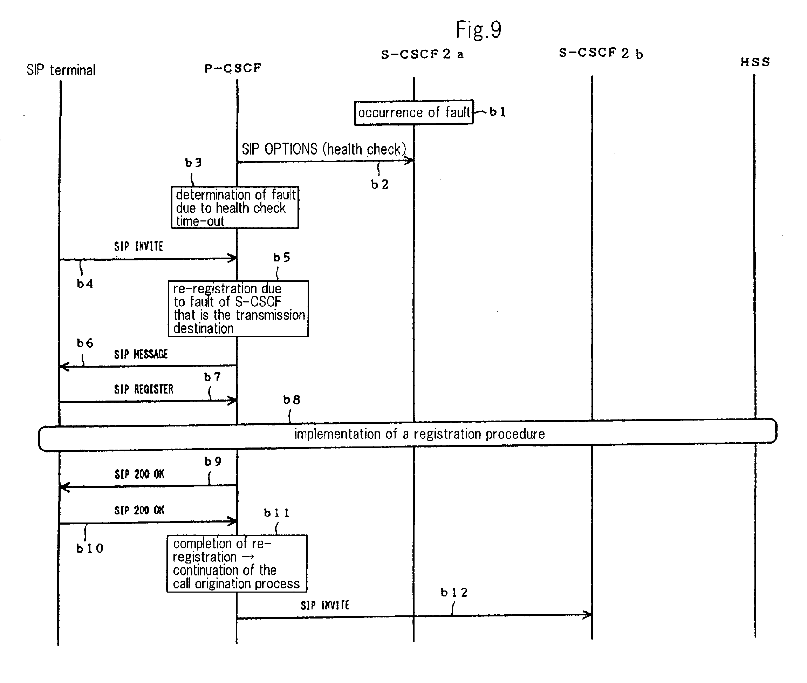

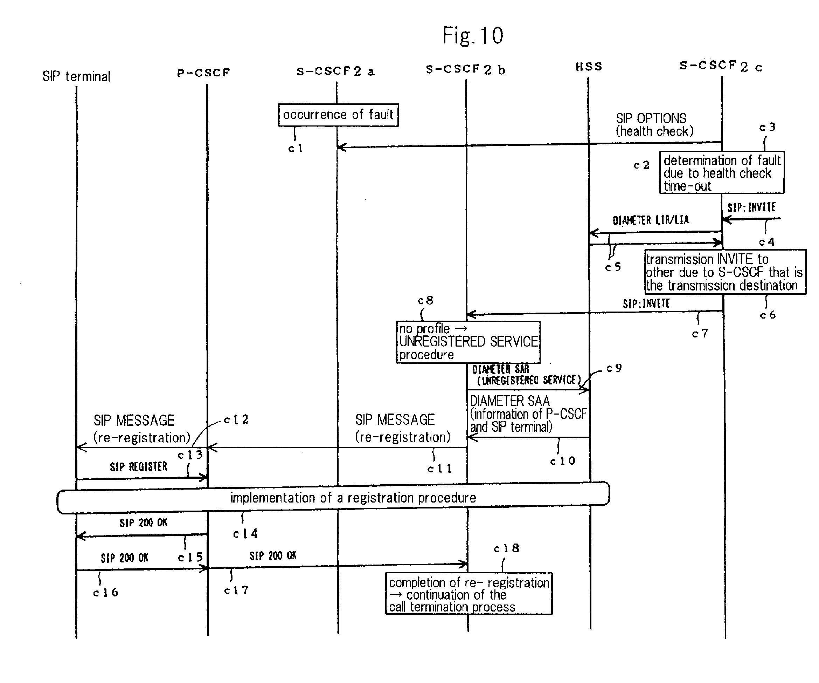

FIG. 8 shows an IMS registration procedure according to the second exemplary embodiment of the present invention. FIG. 9 shows a call origination detour control procedure at the time of an S-CSCF fault according to the second exemplary embodiment of the present invention. FIG. 10 shows a call termination detour control procedure at the time of an S-CSCF fault according to the second exemplary embodiment of the present invention.

The IMS registration procedure that is necessary for carrying out a "re-registration procedure at the time of a fault" according to the second exemplary embodiment of the present invention is first described with reference to FIG. 8.

An SIP terminal transmits to P-CSCF an SIP REGISTER signal to carry out a registration request (Step a1). P-CSCF that has received the SIP REGISTER signal implements a DIAMETER UAR/UAA procedure upon HSS to select an S-CSCF that is to transmit the SIP REGISTER signal (Step a2). P-CSCF thus selects S-CSCF and transmits the SIP REGISTER signal to the selected S-CSCF (Step a3).

S-CSCF acquires the IP address of a SIP terminal and the IP address of P-CSCF from the Route header and Contact header in the SIP REGISTER signal that was received, sets this information to a DIAMETER SAR signal, and transmits it to the HSS (Step a4).

The HSS, having received the DIAMETER SAR signal, stores the IP address of the SIP terminal and the IP address of the P-CSCF that were set and transmits the service profile of the subscriber to the S-CSCF by a DIAMETER SAA signal (Step a5).

The S-CSCF, having received the DIAMETER SAA signal, transmits SIP 200 OK indicating completion of the registration procedure to the P-CSCF (Step a6). The P-CSCF, having received the SIP 200 OK, transmits the SIP 200 OK indicating completion of the registration procedure to the SIP terminal (Step a7).

The S-CSCF transmits an SIP REGISTER signal to carry out registration to the AS (Step a8). The AS implements a DIAMETER UDR/UDA procedure upon the HSS to acquire the service profile of the subscriber (Step a9) and transmits an SIP 200 OK indicating completion of the registration procedure to the S-CSCF (Step a10).

The call origination detour control procedure at the time of an S-CSCF fault according to the second exemplary embodiment of the present invention is next described with reference to FIG. 9. It is here assumed that S-CSCF 2a has experienced a node fault due to some reason (Step b1).

The P-CSCF activates the health check procedure that is implemented periodically and transmits an SIP OPTIONS signal to S-CSCF 2a (Step b2). Because S-CSCF 2a is in a fault state, S-CSCF 2a is unable to receive the SIP OPTIONS signal, whereby P-CSCF detects a response wait time-out of the health check SIP OPTIONS signal that was transmitted and recognizes that S-CSCF 2a is in a fault state (Step b3).

The SIP terminal subsequently transmits an SIP INVITE signal to P-CSCF to carry out a call origination request (Step b4). P-CSCF that has received the SIP INVITE signal attempts to transmit the SIP INVITE signal to S-CSCF 2a to carry out the call origination, but because S-CSCF 2a is in the fault state, determines that a re-registration procedure is necessary (Step b5).

The P-CSCF sets the extension header "X-ServiceType: registration_request" to the SIP MESSAGE signal and transmits it to the SIP terminal (Step b6). The SIP terminal that has received the SIP MESSAGE signal recognizes that re-registration is necessary and transmits an SIP REGISTER signal to the P-CSCF (Step b7). Because S-CSCF 2a has experienced a fault, the registration procedure to another S-CSCF 2b is implemented (Step b8).

Upon completion of the registration procedure, the P-CSCF transmits an SIP 200 OK signal to the SIP terminal (Step b9). The SIP terminal, having received the SIP 200 OK signal, transmits to the P-CSCF a response signal (SIP 200 OK signal) for the SIP MESSAGE signal due to the completion of registration (Step b10).

The P-CSCF, having received the SIP 200 OK signal, recognizes that the re-registration process from the SIP terminal has succeeded, continues the call origination request process from the SIP terminal (Step b11), and transmits an SIP INVITE signal to S-CSCF 2b (Step b12).

The call termination detour control procedure at the time of an S-CSCF, fault according to the second exemplary embodiment of the present invention, is next described with reference to FIG. 10. It is here assumed that S-CSCF 2a has experienced a node fault due to some reason (Step c1).

S-CSCF 2c activates a health check procedure that is implemented periodically and transmits an SIP OPTIONS signal to S-CSCF 2a (Step c2). S-CSCF 2a is in a fault state and therefore is unable to receive the SIP OPTIONS signal, and S-CSCF 2c thus detects a response wait time-out of the health check SIP OPTIONS signal that was transmitted and recognizes that S-CSCF 2a is in a fault state (Step c3).

S-CSCF 2c, upon receiving the call origination request to the SIP terminal by means of the SIP INVITE signal (Step c4), implements a DIAMETER LIR/LIA procedure upon the HSS to acquire the transmission destination of the SIP INVITE signal (Step c5) and thus recognizes that the transmission destination is S-CSCF 2a.

Upon determining that S-CSCF 2a, that is the transmission destination of the SIP INVITE signal, is in a fault state, S-CSCF 2c selects S-CSCF 2b to transmit an SIP INVITE signal (Steps c6 and c7).

S-CSCF 2b that has received the SIP INVITE signal does not hold the subscriber data that received the call termination request and therefore implements an UNREGISTERED SERVICE procedure (Step c8) and transmits a DIAMETER SAR (UNREGISTERED SERVICE) signal to the HSS (Step c9).

The HSS, having received the DIAMETER SAR signal, recognizes that a detour procedure at the time of a fault has occurred because the user is in a registered state, sets the IP address information of the SIP terminal and P-CSCF that was stored at the time of registration to a DIAMETER SAA signal, and transmits this DIAMETER SAA signal to S-CSCF 2b (Step c10).

S-CSCF 2b, having received the DIAMETER SAA signal, recognizes that a call termination detour process has occurred due to a fault because the IP address information of the SIP terminal and P-CSCF have been set in the received signal, sets the extension header "X-ServiceType: registration_request" to an SIP MESSAGE signal, and transmits this SIP MESSAGE signal to P-CSCF (Step c11). In addition, the P-CSCF transmits the SIP MESSAGE signal that is received to the SIP terminal (Step c12).

The SIP terminal, having received the SIP MESSAGE signal, recognizes that re-registration is necessary and transmits an SIP REGISTER signal to the P-CSCF (Step c13). In the P-CSCF, a registration procedure is implemented to another S-CSCF 2b because S-CSCF 2a has experienced a fault (Step c14).

Upon completion of the registration procedure, the P-CSCF transmits an SIP 200 OK signal to the SIP terminal (Step c15). The SIP terminal, having received the SIP 200 OK signal, transmits to the P-CSCF a response signal (SIP 200 OK signal) to the SIP MESSAGE signal due to the completion of registration (Step c16).

The P-CSCF that has received the response signal to the SIP MESSAGE signal transmits an SIP 200 OK signal to S-CSCF 2b (Step c17). S-CSCF 2b that has received the SIP 200 OK signal recognizes that the re-registration process from the SIP terminal has succeeded and continues the call termination INVITE request that was received from S-CSCF 2c (Step c18).

In the present exemplary embodiment, a node in an IMS network periodically implements a health check mode by means of a SIP OPTIONS method with an adjacent node, whereby a node fault of an adjacent node can be recognized. In this way, in the present exemplary embodiment, when a node in which a user that is implementing a call origination/termination service is registered experiences a fault, the node that determined the fault is able to carry out a re-registration procedure.

In the present exemplary embodiment, moreover, even when an S-CSCF that was assigned at the time of registration from a user experiences a fault, the user is able to continue to receive IMS services of call origination/termination.

### Third Exemplary Embodiment

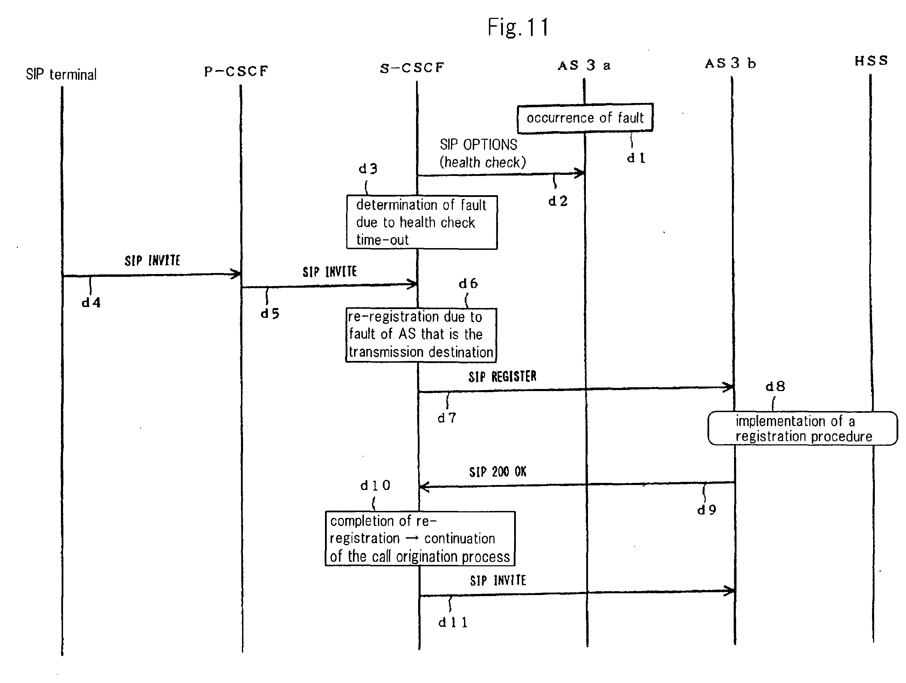

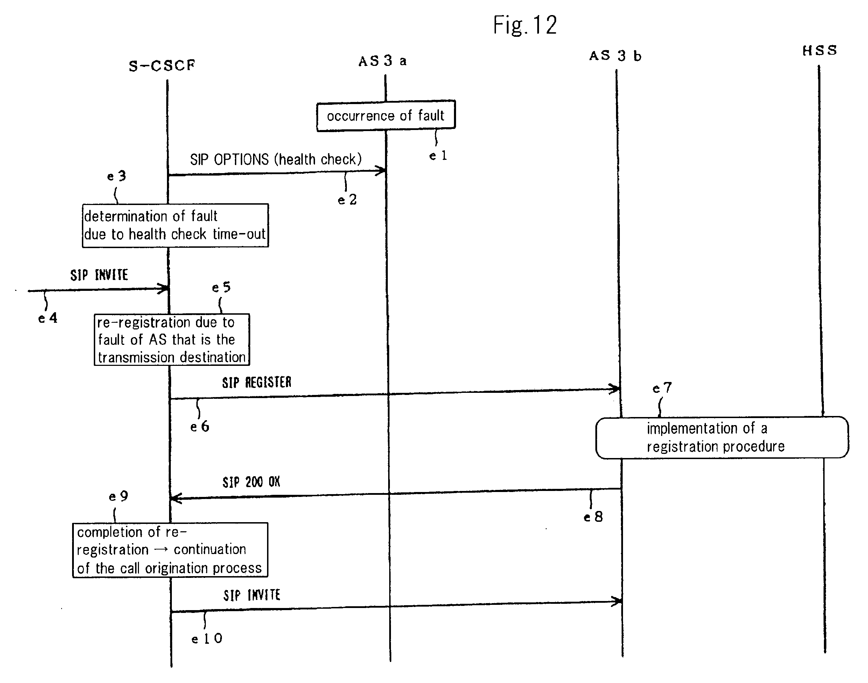

FIG. 11 shows a call origination detour procedure at the time of an AS fault according to the third exemplary embodiment of the present invention, and FIG. 12 shows the call termination detour procedure at the time of an AS fault according to the third exemplary embodiment of the present invention. The basic configuration of the third exemplary embodiment of the present invention is the same configuration as the IMS network according to the second exemplary embodiment of the present invention shown in FIG. 7. However, the third exemplary embodiment of the present invention applies the present invention in a case in which a fault occurs in an application server (AS) that acquires subscriber data in the IMS network and provides various services.

The call origination detour procedure at the time of an AS fault according to the third exemplary embodiment of the present invention is described with reference to FIG. 11. It is here assumed that AS 3a has experienced a fault due to some reason (Step d1).

An S-CSCF activates a health check procedure that is implemented periodically and transmits an SIP OPTIONS signal to AS 3a (Step d2). Because AS 3a is in a fault state, AS 3a is unable to receive the SIP OPTIONS signal and the S-CSCF therefore detects a response wait time-out of the health check SIP OPTIONS signal that was transmitted and recognizes that AS 3a is in a fault state (Step d3).

An SIP terminal transmits an SIP INVITE signal to the P-CSCF to carry out a call origination request (Step d4) and the P-CSCF that receives the SIP INVITE signal transmits the SIP INVITE signal to the S-CSCF (Step d5).

The S-CSCF that has received the SIP INVITE signal attempts to transmit the SIP INVITE signal to AS 3a to carry out a call origination process, but because AS 3a is in a fault state, determines that a re-registration procedure is necessary (Step d6). The S-CSCF selects AS 3b to transmit the SIP REGISTER signal to carry out re-registration (Step d7).

AS 3b that has received the SIP REGISTER signal implements a registration procedure with the HSS (Step d8), acquires the subscriber data, and transmits an SIP 200 OK signal to the S-CSCF (Step d9). The S-CSCF that has received the SIP 200 OK signal recognizes that the re-registration process to AS 3b has succeeded, continues the call origination request process from the SIP terminal (Step d10), and transmits an SIP INVITE signal to AS 3b that has carried out re-registration (Step d11).

The call termination detour procedure at the time of an AS fault according to the third exemplary embodiment of the present invention is next described with reference to FIG. 12. It is here assumed that AS 3 a has experienced a fault due to some reason (Step e1).

The S-CSCF activates a health check procedure that is implemented periodically and transmits an SIP OPTIONS signal to AS 3a (Step e2). AS 3a is in a fault state and therefore is unable to receive the SIP OPTIONS signal, whereby the S-CSCF detects a response wait time-out of the health check SIP OPTIONS signal that was transmitted and recognizes that AS 3a is in a fault state (Step e3).

The S-CSCF, upon receiving the SIP INVITE signal of the call termination request (Step e4), attempts to transmit the SIP INVITE signal to AS 3a to carry out the call termination request, but because AS 3a is in a fault state, determines the necessity of the re-registration procedure (Step e5).

The S-CSCF selects AS 3b to transmit a SIP REGISTER signal to carry out re-registration (Step e6). AS 3b, having received the SIP REGISTER signal, implements the registration procedure with the HSS (Step e7), acquires the subscriber data, and transmits an SIP 200 OK signal to the S-CSCF (Step e8).

The S-CSCF, having received the SIP 200 OK signal, recognizes that the re-registration process to AS 3b has succeeded, continues the call termination request process (Step e9), and transmits an SIP INVITE signal to AS 3b that carried out re-registration (Step e10).

In this way, in the present exemplary embodiment, a node in an IMS network is able to recognize a node fault of an adjacent node by periodically implementing a health check mode with the adjacent node by means of an SIP OPTIONS method. In this way, when the node in which a user that implements a call origination/termination service is registered experiences a fault in the present exemplary embodiment, a node that determines the fault is able to carry out a re-registration procedure.

In the present exemplary embodiment, moreover, the user is also able to continue to receive IMS services of call origination/termination when the AS that was assigned at the time of registration from a user experiences a fault.

As one example of the effect of the present invention, the node fault of an adj acent node can be recognized and a user can continue to receive IMS services of call origination/termination.

While the invention has been particularly shown and described with reference to exemplary embodiments and working examples thereof, the invention is not limited to these embodiments and examples. It will be understood by those of ordinary skill in the art that various changes in form and details may be made therein without departing from the spirit and scope of the present invention as defined by the claims.

This application is based upon and claims the benefit of priority from Japanese patent application No. 2008-018449 filed on January 30, 2008, the content of which is incorporated by reference.

## Claims

1. A node apparatus of an IP multimedia subsystem that provides a multimedia service to a user by using SIP to control multimedia communication that includes speech, comprising:
a health check unit that implements a health check upon an adjacent node apparatus; and
a recognition unit that recognizes a fault state of said adjacent node apparatus based on a result of a health check by said health check unit.

2. The node apparatus according to claim 1, wherein said health check unit implements a health check by an SIP OPTIONS method.

3. The node apparatus according to claim 1 or claim 2, wherein said recognition unit recognizes a state in said adjacent node apparatus in which call origination/termination services cannot be provided at the time of a call origination service request from a user and at the time of a call termination request to a user.

4. The node apparatus according to any one of claims 1 to 3, further comprising a re-registration procedure implementation unit that carries out detour control by re-registration when said recognition unit detects a fault state of said adjacent node apparatus.

5. The node apparatus according to claim 4, wherein said re-registration procedure implementation unit implements a re-registration procedure by an SIP MESSAGE method.

6. The node apparatus according to any one of claims 1 to 5, wherein said node apparatus is either a serving-call session control apparatus or a proxy-call session control apparatus and detects a fault state of an adjacent serving-call session control apparatus and application server.

7. The node apparatus according to claim 6, wherein:
said serving-call session control apparatus is an S-CSCF; and
said proxy-call session control apparatus is a P-CSCF.

8. A communication system, comprising:
a plurality of the node apparatuses according to any one of claims 1 to 7.

9. The communication system according to claim 8, wherein:
a first node apparatus and a second node apparatus that is adjacent to the first node apparatus are provided as a plurality of said node apparatuses; and
said first node apparatus and said second node apparatus carry out mutual health checks.

10. The communication system according to claim 8 or claim 9, wherein:
a first node apparatus and a second node apparatus that is adjacent to the first node apparatus are provided as a plurality of said node apparatuses; and
said first node apparatus, upon detecting a fault state of said second node apparatus, carries out detour control of call termination.

11. A method of providing a service by a node apparatus of an IP multimedia subsystem that provides a multimedia service to a user by using SIP to control multimedia communication that includes speech , said method carrying out:
a health check process of implementing a health check upon an adjacent node apparatus; and
a recognition process of recognizing a fault state of said adjacent node apparatus based on a result of a health check realized by said health check process.

12. the method of providing a service according to claim 11, wherein said health check process is a process of implementing a health check by an SIP OPTIONS method.

13. The method of providing a service according to claim 11 or claim 12, wherein said recognition process is a process of recognizing a state in said adjacent node apparatus in which call origination/termination services cannot be provided at the time of a call origination service request from a user and at the time of a call termination request to a user.

14. The method of providing a service according to any one of claims 11 to 13, further comprising a re-registration procedure implementation process of carrying out detour control by means of re-registration when a fault state of said adjacent node is detected in said recognition process.

15. The method of providing a service according to claim 14, wherein said re-registration procedure implementation process is a process of implementing a re-registration procedure by an SIP MESSAGE method.

16. The method of providing a service according to any one of claims 11 to 15, wherein said node apparatus is either a serving-call session control apparatus or a proxy-call session control apparatus and detects a fault state of an adjacent serving-call session control apparatus and application server.

17. The method of providing a service according to claim 16, wherein:
said serving-call session control apparatus is an S-CSCF; and
said proxy-call session control apparatus is a P-CSCF.
